# EUROPEAN PATENT APPLICATION

(11) **EP 2 699 060 A2**
(43) Date of publication of application: **19.02.2014**
(21) Application number: 13159185.1
(22) Date of filing: 14.03.2013
(51) Int. Cl.: H05B 33/08, H05B 37/02

(54) **Luminaire**

(30) Priority: 20.06.2012 JP 2012138822
(71) Applicant: Toshiba Lighting & Technology Corporation, Yokosuka-shi Kanagawa 237-8510 (JP)
(72) Inventor: Matsumoto, Shinichiro, Kanagawa, 237-8510 (JP)
(74) Representative: Bokinge, Ole

(57) **Abstract**

According to one embodiment, a luminaire includes a rectifying section configured to rectify a voltage of an alternating-current power supply, a power converting section configured to receive an input of an output voltage of the rectifying section and supply required output power to a lighting load, an output control section capable of controlling the operation and output electric energy of the power converting section, a dimming operation terminal device operated to thereby determine a dimming amount of the lighting load, a dimming control section formed to be capable of energizing the dimming operation terminal device and configured to create a dimming signal on the basis of an energizing electric signal that changes according to the dimming operation terminal device and transmit via a first electric insulating section a signal for controlling the output electric energy of the power converting section according to the dimming signal.

The luminare includes a control power supply section configured to generate a direct-current voltage for control from an output of the alternating-current power supply, supply an operating voltage to the output control section, and supply an operating voltage to the dimming control section via a second electric insulating section.

## Description

### CROSS-REFERENCE TO RELATED APPLICATIONS

This application is based upon and claims the benefit of priority from the prior Japanese Patent Application No.2012-138822, filed on June 20, 2012, the entire contents of which are incorporated herein by reference.

### FIELD

Embodiments described herein relate generally to a luminaire configured to convert a direct-current voltage, which is obtained by rectifying a power supply voltage, into a required voltage to urge a lighting load and, on the other hand, change an optical output of the lighting load according to a dimming signal changed according to the operation of a dimming operation terminal device by an operator.

### BACKGROUND

There has been proposed a dimming device of a type for transmitting, via a signal line separate from a power supply line, a dimming signal to a lighting circuit that lights a lighting load. The dimming device of the type for transmitting the dimming signal via the signal line is sometimes referred to as four-wire dimming device.

The dimming device is the four-wire dimming device that lights LEDs (light emitting diodes) using a rising voltage chopper circuit, transmits a duty-variable (PWM-controlled) dimming signal from a dimming operation terminal device via the signal line, and controls an output of the rising voltage chopper circuit to dim and light the LEDs.

The dimming operation terminal device that generates the duty-variable dimming signal obtains electric power for operation from an alternating-current power supply. The electric power can be adapted to be, in general, after being stepped down by a resistance voltage divider, a transformer, or the like, rectified and smoothed (further fixed in voltage if necessary) to obtain a desired direct-current voltage.

However, concerning the supply of the electric power, as explained below, there is a problem concerning whether the dimming operation terminal device is electrically insulated from the alternating-current power supply. If the dimming operation terminal device is not sufficiently electrically insulated from the alternating-current power supply and the lighting circuit, safety of an operator against an electric shock is not guaranteed. Further, if the dimming operation terminal device is set adjacent to other electric devices, for example, a plurality of dimming operation terminal devices are provided in parallel, it is necessary to sufficiently take into account electric insulation from the other electric devices. Therefore, a complicated configuration is often required.

On the other hand, as the dimming operation terminal device, besides a dimming operation terminal device that includes a power supply for operation and transmits a duty-variable (PWM-controlled) dimming signal, a dimming operation terminal device is conceivable that does not include a power supply for operation and causes, through operation, a lighting circuit to generate a dimming signal. For example, a method is conceivable in which a variable resistance section is provided in the dimming operation terminal device, electric power is supplied to the variable resistance section from the lighting circuit, and the dimming operation terminal device changes the resistance of the variable resistance section to thereby cause the lighting circuit to generate a different electric signal.

However, in this case, as explained above, the dimming operation terminal device needs to be electrically insulated from the lighting circuit.

### BRIEF DESCRIPTION OF THE DRAWINGS

FIG. 1 is a circuit diagram showing an embodiment; and
FIG. 2 is a diagram showing action in the embodiment.

### DETAILED DESCRIPTION

In view of the above circumstances, there is provided a luminaire that can electrically insulate a dimming operation terminal device from an alternating-current power supply and a lighting circuit and can light a lighting load at brightness corresponding to a desired dimming signal based on the operation of the dimming operation terminal device from the time when a power supply is turned on.

The applicant previously proposed a luminaire for dimming that satisfies a request for electric insulation (Japanese Patent Application No. 2011-72439). The luminaire described in the prior application is a so-called four-wire dimming device including a power converting section including a switching section and configured to switch an output voltage of a rectifying section and supply required output power to a lighting load, an output controlling unit capable of controlling the switching section of the power converting section and adjusting the output power, a dimming control section formed to be capable of energizing a dimming operation terminal device, which is operated to thereby determine a dimming amount of the lighting load, and configured to create a dimming signal on the basis of an energizing electric signal, which changes according to the operation of the dimming operation terminal device, and transmit, via an insulating section, a signal for controlling the switching section according to the dimming signal to the output control section, and an auxiliary power supply section including an insulated auxiliary winding wire magnetically coupled to a high-frequency voltage generating section of the power converting section and configured to supply an output of the auxiliary winding wire as operating power for the dimming control section.

The luminaire described in the prior application is electrically insulated from the alternating-current power supply or the lighting circuit (the power converting section, the output control section, etc.) by the insulating section and the insulated auxiliary winding wire. Therefore, it is possible to obtain sufficient electric insulation of the dimming operation terminal device. Consequently, it is possible to eliminate a risk of an electric shock of an operator.

However, a situation sometimes occurs in which, when the alternating-current power supply is turned on, the power converting section starts operation and an output of the power converting section rises and, before a sufficient operating voltage is supplied from the auxiliary winding wire to the dimming control section, the lighting load is lit. For example, the lighting load is lit brightly once and then changes to desired brightness. Therefore, a user feels a sense of discomfort.

A luminaire according to an embodiment includes a rectifying section configured to rectify a voltage of an alternating-current power supply, an output-variable power converting section configured to receive an input of an output voltage of the rectifying section and supply required output power to a lighting load, an output control section capable of controlling, operation and output electric energy of the power converting section, a dimming operation terminal device operated to thereby determine a dimming amount of the lighting load, and a dimming control section formed to be capable of energizing the dimming operation terminal device and configured to create a dimming signal on the basis of an energizing electric signal that changes according to the operation of the dimming operation terminal device and transmit, via a first electric insulating section, a signal for controlling the output electric energy of the power converting section according to the dimming signal. The luminaire includes a control power supply section, which is a power supply section for control, configured to generate a direct-current voltage for control from an output of the alternating-current power supply, supply an operating voltage to the output control section, and supply an operating voltage to the dimming control section via a second electric insulating section, which is an output control operating voltage and an dimming control operating voltage respectively.

In this embodiment, the lighting load is representatively a light emitting diode. However, the lighting load may be a discharge lamp, a bulb, a laser, an organic EL element, and the like.

The power converting section may be any one of a DC/AC inverter, a DC/DC converter, and the like. If the power converting section is the DC/DC converter, the power converting section is allowed to be a rising voltage chopper, for example, step-up (booster) chopper, a falling voltage chopper, for example, step-down chopper, other switching type power converters, or the like. Functionally, the power converting section is allowed to be a power converting section having a constant voltage characteristic, a constant current characteristic, or a constant power characteristic.

The output control section only has to be capable of controlling the operation and output electric energy of the power converting section. If the power converting section is a power converting section including a switching section such as an inverter, a converter, or a chopper, the output control section may be any output control section such as an output control section that controls an on-duty ratio (an ON period/one cycle period of switching) of the operation and the switching of the switching section or an output control section that controls a switching frequency.

If the power converting section is a power converting section that detects load power, compares the load power with a reference signal, and controls an output such as a constant voltage circuit, a constant current circuit, or the like, the output control section may change the operation and a value of the reference signal or a detection signal and control output electric energy.

The dimming operation terminal device does not include a power supply for operation and is operated to thereby resultantly transmit a dimming signal. That is, electric power is supplied to the dimming operation terminal device from a dimming control section explained below and an operator operates the dimming operation terminal device, whereby the dimming control section can detect a change in supplied power as a change in the energization electric signal. The change in the energization electric signal may be a voltage, an electric current, or electric power. For example, if the dimming operation terminal device is configured to be capable of changing an impedance value according to operation and a voltage of a value having a constant current characteristic, a constant voltage characteristic, or a constant power characteristic is applied to the dimming operation terminal device from the dimming control section, the dimming control section can detect a change in an impedance value of the dimming operation terminal device as a change in a voltage value or a change in a current value or a power value.

The electric power supplied from the dimming control section may be either a direct current or an alternating current. However, if the electric power is the direct current, the configuration of the dimming operation terminal device and processing of the dimming signal are simpler.

The dimming control section controls the output electric energy of the power converting section via the output control section according to a dimming signal obtained by the operation of the dimming operation terminal device (a dimming signal based on a change in an electricity amount detected by the dimming control section according to the operation of the dimming operation terminal device). Besides, the dimming control section may include a negative feedback control function for urging a load with a constant voltage, a constant current, or constant power according to a signal that changes in relation to a voltage and an electric current of the load.

For example, a photo-coupler, an insulating transformer, and the like can be used as the insulating section (the first insulating section) used for the signal transmission from the dimming control section to the output control section. However, the insulating section may be other means.

The power supply section for control, namely, control power supply section, generates the direct-current voltage for control from the alternating-current power supply output. Therefore, electric power may be input to the power supply section for control either from an input stage or an output stage of the rectifying section. The power supply unit for control may be configured in any way as long as the power supply section for control can supply the operating voltage to the output control section and the dimming control section. The operating voltage for the output control section and the dimming control section is a relatively low voltage. Power necessary for the output control section and the dimming control section is relatively small power. Therefore, in general, a falling voltage section is used as the power supply section for control. As the falling voltage section, there are a falling voltage chopper such as step-down chopper, three-terminal regulator, a falling voltage transformer such as step-down transformer, a resistance voltage divider, and the like. If the falling voltage chopper is used, the insulating section (the second insulating section) can be configured by magnetically coupling a separated winding wire to an inductor, which is a component of the falling voltage chopper. Besides, an insulating transformer may be provided between components or output ends of the falling voltage chopper. An output winding wire of the transformer may be used as an insulating section. If the falling voltage chopper is used, it is possible to reduce the size of the power supply section for control by operating at a high frequency equal to or higher than the audio frequency for example.

If the falling voltage transformer is used, a separated winding wire may be provided in the transformer. In this way, the configurations of the power supply section for control and the insulating section are not limited.

The dimming control section receives the supply of electric power from the power supply section for control and supplies the electric power to the dimming operation terminal device.

In the luminaire according to this embodiment, the dimming operation terminal device is electrically insulated from the alternating-current power supply and the lighting circuit side (the power converting section side). Therefore, even if a plurality of the dimming operation terminal devices are provided in parallel or one dimming operation terminal device is configured to control a plurality of the lighting circuits, a problem concerning electric insulation of an electric system less easily occurs. Further, the output of the power supply section for control is supplied as the power for operation of the output control section and the dimming control section. Therefore, it is possible to start up the dimming control section earlier than (or at least simultaneously with) the output control section. As a result, at a point when the output control section starts to actuate the power converting section, it is possible to supply a dimming signal corresponding to an operation state of the dimming operation terminal device to the output control section. Therefore, it is possible to prevent the lighting load from being temporarily lit brighter than dimming setting when the power supply is turned on. This is because the operating power for the dimming control section is received from the power supply section for control rather than from the power converting section.

In this embodiment, the power supply section for control can be configured to include a falling voltage chopper provided on an output side of the rectifying section, include a separated auxiliary winding wire magnetically coupled to an inductor for power accumulation, and supply an output of the auxiliary winding wire as the operating voltage for the dimming control section. The falling voltage chopper includes a switching element, a smoothing capacitor for output, the inductor for power accumulation, and a diode for a flywheel that forms a circuit for supplying electric power of the inductor for power accumulation to the smoothing capacitor for output.

In this embodiment, the dimming control section supplies a predetermined direct-current voltage to the dimming operation terminal device. The dimming operation terminal device includes a variable resistance section provided between input ends of the predetermined direct-current voltage and is configured to change, according to the operation of the dimming operation terminal device by the operator, an energization electric signal of the dimming control section between a minimum value and a maximum value.

Therefore, according to this embodiment, the dimming operation terminal device is electrically insulated from the alternating-current power supply and the lighting circuit. Therefore, it is unnecessary to particularly take into account electric insulation from other dimming operation terminal devices and the lighting circuit and wiring work is easy. The dimming operation terminal device is safe without a risk of an electric shock of the operator.

Further, the operating voltage is supplied to the output control section and also to the dimming control section via the electric insulating section by the power supply section for control. Therefore, it is easy to adjust timing of startup of the dimming control section and the output control section. It is possible to prevent the lighting load from being temporarily lit bright when the power supply is turned on.

An embodiment is explained below on the basis of the accompanying drawings.

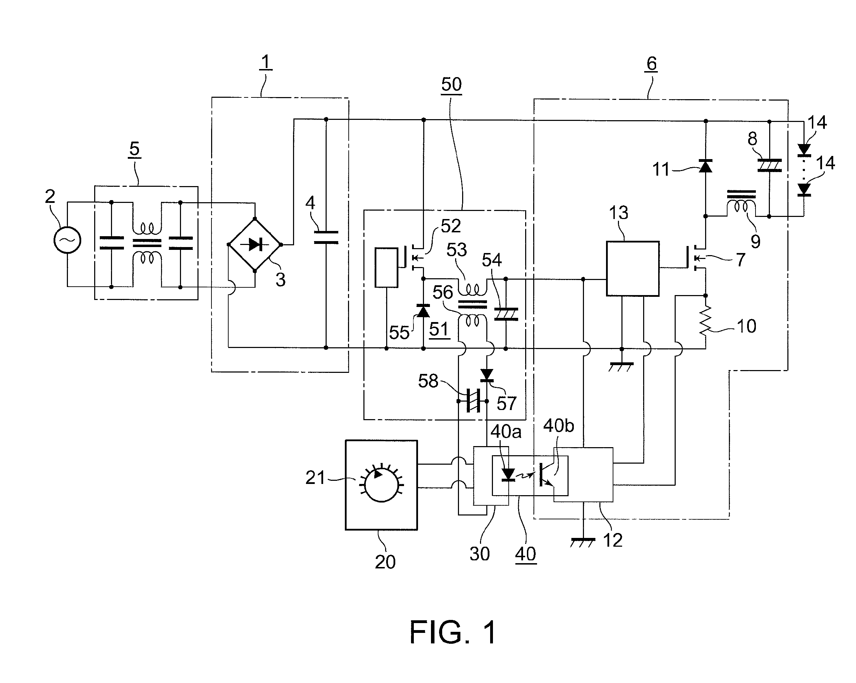

FIG. 1 is a circuit diagram showing this embodiment. Reference numeral 1 denotes a rectifying section. The rectifying section 1 rectifies a voltage of an alternating-current power supply 2 such as a commercial power supply and smoothes the voltage according to necessity to obtain a direct-current voltage. As the rectifying section 1, a rectifier, a smoothing capacitor, a rising voltage chopper circuit such as step-up (booster) chopper for bringing a waveform of an input current closer to a sine wave, and the like can be used independently or used in combination as appropriate. In this embodiment, the rectifying section 1 includes a full-wave rectifier 3 and a capacitor 4 for high-frequency noise absorption.

A high frequency blocking filter 5, which is well known or configured as appropriate, is provided between the rectifying section 1 and the alternating-current power supply 2.

An output of the rectifying section 1 is input to a power converting section 6 mainly configured by a falling voltage chopper such as step-down chopper in this embodiment. The power converting section 6 includes a switching section 7 switched at a frequency higher than a frequency of the alternating-current power supply 2, for example, between several kilohertz and several hundred kilohertz. As the switching section 7, various semiconductor switching elements can be used. However, in this embodiment, the switching section 7 is configured using a field effect transistor. The number of switching sections 7 may be one or plural and can be set according to a circuit configuration of the power converting section 6. The switching section 7 can be configured integrally with an output control section 12 and a driving circuit 13 explained below. For example, if the output control section 12 and the driving circuit 13 are integrated as an IC, the switching section 7 and at least one of the output control section 12 and the driving circuit 13 can be integrated as an IC.

The power converting section 6 according to this embodiment includes a capacitor 8, an inductor 9, and a resistor 10 for current detection connected in series together with the switching section 7 between output terminals of the rectifying section 1. In this specification, if components are connected in series or in parallel, this means that another component is not interposed between the components and also means that another component is interposed between the components. The switching section 7, the capacitor 8, the inductor 9, and the resistor 10 configure the falling voltage chopper.

Further, the power converting section 6 includes a diode 11 for a flywheel that supplies energy of the inductor 9 to the capacitor 8 in an OFF period of the switching section 7. The power converting section 6 includes a driving circuit 13 for driving the switching section 7 to be turned on and off. The driving circuit 13 transmits an output of the output control section 12 explained below to the switching section 7 and drives the switching section 7 to be turned on and off. In the embodiment, the driving circuit 13 plays a role of an output section of the output control section 12 and may be integrated with the output control section 12.

The power converting section 6 in this embodiment is configured as explained above. If the switching section 7 is turned on and off at a high frequency via the driving circuit 13 according to a control content of the output control section 12, a smoothed direct-current voltage appears across both ends of the capacitor 8. The direct-current voltage urges and lights a lighting load 14, for example, light emitting diodes (LEDs).

The power converting section 6 is configured to input a current signal, which flows to the resistor 10 in an ON period of the switching section 7, to the output control section 12. That is, the power converting section 6 is configured to detect a voltage signal across both ends of the resistor 10.

The output control section 12 is configured using an IC, a microcomputer, a discrete component, or the like. The output control section 12 outputs an ON signal to the switching section 7 at a predetermined period. If the voltage signal across both the ends of the resistor 10 reaches a predetermined value, the output control section 12 turns off the switching section 7. That is, the output control section 12 repeats the ON signal at the predetermined period and an OFF signal corresponding to the voltage signal across both the ends of the resistor 10 to turn on and off the switching section 7, for example, at a frequency equal to or higher than an audio frequency.

An electric current flowing to the resistor 10 is not exactly an electric current flowing to a lighting load 14 but is related to the electric current. Therefore, by performing feedback control as explained above, it is possible to substantially fix a current value of the lighting load 14 at a set dimming level.

The output control section 12 controls the switching section 7 of the power converting section 6 to be turned on and off as explained above and controls the switching section 7 according to a control signal from a dimming control section 30 as explained below.

Therefore, in the output control section 12, a section configured to control the switching section 7 to be turned on and off and a section configured to perform the feedback control and dimming control can be separated in terms of functions and/or configurations. However, in this embodiment, the sections are shown integrated.

Reference numeral 20 denotes a dimming operation terminal device and 30 denotes a dimming control section. The dimming operation terminal device 20 includes an impedance section capable of changing an impedance value or includes a pulse generating section capable of changing on-duty. The dimming operation terminal device 20 includes, for example, a pivoting operation instrument 21 operable from the outside. The dimming operation terminal device 20 is supplied electric power, namely, is energized, from the dimming control section 30. The operation instrument 21 is operated, whereby the dimming operation terminal device 20 changes a voltage signal, a current signal, a power signal, the on-duty of a pulse signal, and the like in the dimming control section 30.

For example, a direct-current voltage of about 10 V is supplied from the dimming control section 30 to the dimming operation terminal device 20. A continuously variable resistor is provided on the dimming operation terminal device 20 side to be located between both ends of the direct-current voltage of about 10 V. The continuously variable resistor is operable by the operation instrument 21. Then, the dimming control section 30 can detect an arbitrary electric signal between about 0 V and 10 V.

The change of the voltage value is explained above. However, the electric signal, the power signal, the on-duty of the pulse, and the like can be changed in the same manner. Those skilled in the art can appropriately design the dimming operation terminal device 20 and the dimming control section 30.

In the dimming control section 30, dimming amounts corresponding to values of the electric signal, for example, the voltage signal, which changes as explained above, are made associated in advance. The dimming control section 30 transmits the dimming amounts as the dimming signals. As the dimming control section 30, an IC, a microcomputer, or the like is used. The dimming control section 30 can be a dimming control section including a storing section, a signal processing section, and a signal transmitting section.

For example, an output of the dimming operation terminal device 20 and the brightness of the lighting load 14 can be set in a relation in which, as the output changes between 0 V and 10 V, the brightness linearly increase. Naturally, the output and the brightness only have to be associated in a relation in which required brightness can be obtained. The brightness may decrease according to an increase in the output of the dimming operation terminal device 20. The brightness may change curvilinearly rather than linearly. An example of the dimming signal is a PWM (Pulse Width Modulation) signal. However, the dimming signal may be a voltage level signal or the like.

The dimming signal is transmitted to the output control section 12 via the insulating section 40. In this embodiment, a light-emitting diode 40a included in a photo-coupler is caused to emit light in a period of the on-duty of the PWM signal and not to emit light in a period of the off-duty of the PWM signal. The emitted light of the light-emitting diode 40a is received by a photo-transistor 40b included in the photo-coupler and input to the output control section 12 as a control signal. The output control section 12 controls the output electric energy of the power converting section 6 according to the control signal as explained above.

Reference numeral 50 denotes a power supply section for control, namely, a control power supply section. In this embodiment, the power supply section for control 50 mainly includes a falling voltage chopper 51. The falling voltage chopper 51 is provided on an output side of the rectifying section 1. The falling voltage chopper 51 includes a switching element 52, an inductor for power accumulation 53, and a smoothing capacitor for output 54 mutually connected in series. The falling voltage chopper 51 includes a diode 55 for a flywheel that forms a circuit for supplying electric power of the inductor for power accumulation 53 to the smoothing capacitor for output 54. ON and OFF signals are supplied to a gate terminal of the switching element 52 by a well-known driving section. The switching element 52 performs switching according to the ON and OFF signals. And, an output of the smoothing capacitor 54 is supplied to the output control section 12 and the driving circuit 13 as an operating voltage.

In the power supply section for control 50, a separated auxiliary winding wire 56 magnetically coupled to the inductor for power accumulation 53 is provided. An output voltage of the auxiliary winding wire 56 is charged in a capacitor for smoothing 58 via a diode 57. An output of the capacitor for smoothing 58 is supplied to the dimming control section 20 as an operating voltage.

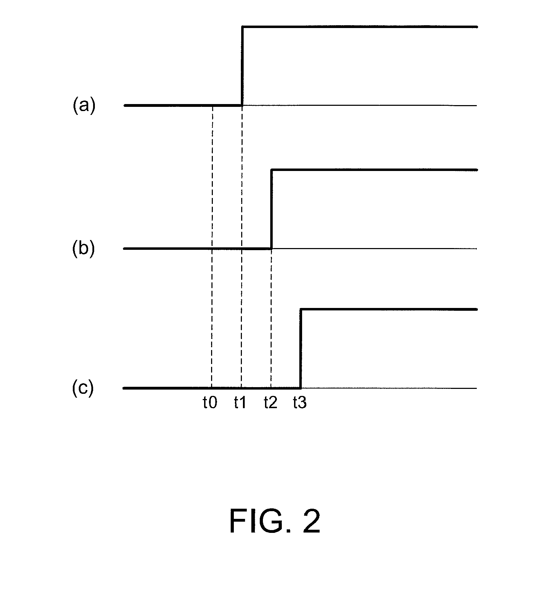

Action in this embodiment is explained with reference to FIG. 2.
In FIG. 2, (a) indicates the operation of the power supply section for control 50, (b) indicates the operation of the dimming control section 30, and (c) indicates the operation of the output control section 12 and the power converting section 6. (a) may be the potential of an internal output node. Actual period t0 to t3 is extremely short time.

If the alternating-current power supply 2 is turned on via a not-shown switch (t0 in FIG. 2), an alternating-current voltage is rectified by the rectifying section 1 and supplied to the power supply section for control 50. An output of the rectifying section 1 is applied to the power converting section 6 as well. However, at this point, the output control section 12 does not operate yet and does not output a control signal to the driving circuit 13. Therefore, the power converting section 6 does not start operation and does not output electric power. Therefore, the lighting load 14 is not lit.

At t1 in FIG. 2, in the power supply section for control 50, the falling voltage chopper 51 operates and outputs a predetermined low voltage ((a) in FIG. 2). The output of the falling voltage chopper 51 is supplied to the smoothing capacitor 54 and supplied to the smoothing capacitor 58 via the auxiliary winding wire 56 and the diode 57.

According to a relation between charging time constants of the smoothing capacitor for output 54 and the smoothing capacitor 58 and operation start voltages of the dimming control section 30 and the output control section 12, settings is made to start the dimming control section 30 first. That is, at t2 in FIG. 2, as indicated by (b) in FIG. 2, the dimming control section 30 starts operation and becomes capable of outputting a dimming signal.

Subsequently, at t3 in FIG. 2, as indicated by (c) in FIG. 2, the output control section 12 starts operation (the driving circuit 13 may start operation simultaneously with or before or after the output control section 12), the dimming signal is supplied from the dimming control section 30 that already starts the operation.

Therefore, the power converting section 6 lights the lighting load 14 with an output corresponding to the dimming signal based on the operation of the dimming operation terminal device 20 from the start of lighting.

That is, in the power converting section 6, the switching section 7 is controlled to be turned on and off by the output control section 12 and generates a predetermined direct-current voltage across both the ends of the capacitor 8. The lighting load 14 is applied with the direct-current voltage across both the ends of the capacitor 8 and lit.

If the operation instrument 21 of the dimming operation terminal device 20 is pivoted in this state, an energization electric signal, i.e., a voltage level of the dimming control section 30 changes. The dimming control section 30 creates, on the basis of the change in the electric signal, a dimming signal associated with the change in advance.

The dimming signal is supplied to the output control section 12 via the insulating section 40. The output control section 12 changes a switching state of the switching section 7.

Consequently, it is possible to change a voltage across both the ends of the capacitor 8 and change a predetermined value compared with a voltage across both the ends of the resistor 10. Therefore, it is possible to change a current value of the lighting load 14 and set an optical output of the lighting load 13 to a desired optical output.
At t3 in FIG. 2, if the output control section 12 starts operation as indicated by (c) in FIG. 2, a dimming signal is supplied from the dimming control section 30 that already starts operation. Therefore, the power converting section 6 lights the lighting load 14 with an output corresponding to the dimming signal based on the operation of the dimming operation terminal device 20 from the start of lighting. Before t3, since the output control section 12 does not operate, the lighting load 14 is not lit. That is, in this embodiment, if the alternating-current power supply is turned on, the power supply section for control 50 and the dimming control section 30 operate and, subsequently, the output control section 12 and the power converting section 6 operate, and the lighting load 14 is lit with an output corresponding to a signal based on the operation of the dimming operation terminal device 20.

The power supply to the dimming control section 30 is performed by the insulated power supply section for control 50 and the transmission of the dimming signal is performed via the insulating section 40. Therefore, the dimming operation terminal device 20 is insulated from the alternating-current power supply 2 and the power converting section 6. Therefore, even if a plurality of dimming operation terminal devices 20 are provided in parallel to correspond to a plurality of lighting loads 14 or even if the plurality of lighting loads 14 are controlled by a common dimming operation terminal device 20, it is possible to perform electric wiring work without particularly taking into account a potential difference among the dimming operation terminal devices 20 or between the dimming operation terminal device 20 and the power converting section 6. Therefore, the work is simplified.

Since the dimming operation terminal device 20 is insulated as explained above, even if connection polarity of the dimming operation terminal device 20 is wrong or even if an electric insulation failure occurs in the dimming operation terminal device 20, the operator does not get an electric shock.

The operating voltage is supplied to the dimming control section 30 using the power supply section for control 50 necessary for the output control section 12. Therefore, it is possible to use components in common and provide a luminaire in small size and inexpensively.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A luminaire comprising:
a rectifying section configured to rectify a voltage of an alternating-current power supply;
a power converting section configured to receive an input of an output voltage of the rectifying section and supply required output power to a lighting load;
an output control section capable of controlling, operation and output electric energy of the power converting section;
a dimming operation terminal device operated to thereby determine a dimming amount of the lighting load;
a dimming control section formed to be capable of energizing the dimming operation terminal device and configured to create a dimming signal on the basis of an energizing electric signal that changes according to the operation of the dimming operation terminal device and transmit, via a first electric insulating section, a signal for controlling the output electric energy of the power converting section according to the dimming signal; and
a control power supply section configured to generate a direct-current voltage for control from an output of the alternating-current power supply, supply an operating voltage to the output control section, and supply an operating voltage to the dimming control section via a second electric insulating section.

2. The luminaire according to claim 1, wherein the control power supply section includes a falling voltage chopper provided on an output side of the rectifying section, and includes a separated auxiliary winding wire magnetically coupled to an inductor for power accumulation, and supplies an output of the auxiliary winding wire as the operating voltage for the dimming control section.

3. The luminaire according to claim 2, wherein the falling voltage chopper includes a switching element, a smoothing capacitor for output, the inductor for power accumulation, and a diode for a flywheel that forms a circuit for supplying electric power of the inductor for power accumulation to the smoothing capacitor for output.

4. The luminaire according to any one of claims 1 to 3, wherein
the dimming control section supplies a predetermined direct-current voltage to the dimming operation terminal device, and
the dimming operation terminal device includes a variable resistance section provided between input ends of the predetermined direct-current voltage and is configured to change, according to operation of the dimming operation terminal device for changing resistance by an operator, the energization electric signal of the dimming control section between a minimum value and a maximum value.

5. The luminaire according to any one of claims 1 to 4, wherein the first insulating section is a photo-coupler or an insulating transformer.

6. The luminaire according to any one of claims 1 to 5, wherein the second insulating section is a separated auxiliary winding wire magnetically coupled to an inductor for power accumulation.

7. The luminaire according to any one of claims 1 to 6, wherein the power converting section includes a driving circuit controlled by the control power supply section and the output control section and a falling voltage chopper controlled by the driving circuit.

8. The luminaire according to any one of claims 1 to 7, wherein, if the alternating-current power supply is turned on, the control power supply section and the dimming control section operate and, subsequently, the output control section and the power converting section operate to light the lighting load with an output corresponding to the dimming signal based on the operation of the dimming operation terminal device.
